(19) Europäisches Patentamt
European Patent Office
Office européen des brevets

(11) **EP 1 443 696 B1**

(12) **EUROPÄISCHE PATENTSCHRIFT**

(45) Veröffentlichungstag und Bekanntmachung des Hinweises auf die Patenterteilung:
**29.08.2007   Patentblatt 2007/35**

(51) Int Cl.:
***H04L 1/00*** *(2006.01)*

(21) Anmeldenummer: **03001994.7**

(22) Anmeldetag: **31.01.2003**

(54) **Verfahren und Vorrichtung zur Überwachung einer sicheren Übertragung von Datenpaketen**

Method and apparatus for monitoring a safe transmission of data packets

Procédé et dispositif pour surveiller une transmission sécurisée des paquets de données

(84) Benannte Vertragsstaaten:
**DE ES FR IT**

(43) Veröffentlichungstag der Anmeldung:
**04.08.2004   Patentblatt 2004/32**

(73) Patentinhaber: **PHOENIX CONTACT GmbH & Co. Kg**
**32825 Blomberg (DE)**

(72) Erfinder: **Schmidt, Joachim, Dipl.-Ing.**
**32805 Horn-Bad Meinberg (DE)**

(74) Vertreter: **Blumbach - Zinngrebe**
**Patentanwälte**
**Alexandrastrasse 5**
**65187 Wiesbaden (DE)**

(56) Entgegenhaltungen:
**GB-A- 2 337 672          US-A1- 2003 021 234**

* **PATENT ABSTRACTS OF JAPAN vol. 2003, no. 03, 5. Mai 2003 (2003-05-05) & JP 2002 335232 A (NEC CORP;NEC MIYAGI LTD), 22. November 2002 (2002-11-22)**

**Beschreibung**

Die Erfindung betrifft ein Verfahren und eine Vorrichtung zur Überwachung einer sicheren Übertragung von Datenpaketen zwischen wenigstens zwei Netzwerkteilnehmern.

Die Patentanmeldung GB-A-2 337 672 offenbart eine paketorientierte Übertragung von Daten, welche zwischen einer vordefinierten Start- und Endsymbolsequenz eingebettet werden. Einzelne Datenpakete sind durch Idle-Symbole voneinander getrennt, welche die Aufrechterhaltung der Verbindung bei zeitweise nicht vorhandenem Datenverkehr ermöglichen.

Die GB-A-2 337 672 zieht darauf ab, die durch Übertragungsfehler hervorgerufene Verfälschung von Startsymbolen zu Idle-Symbolen zu detektieren und daraus eine Fehlerrate zu bestimmen, welche bei Überschreitung eines Grenzwertes zur Sicherung der zukünftigen Datenübertragung eine Reduktion der Datenrate auslöst.

Sollen sicherheitsrelevante Daten über ein herkömmliches Netzwerk, insbesondere ein Bussystem übertragen werden, so müssen in der Regel im Übertragungsprotokoll zusätzliche Maßnahmen ergriffen werden, um die Restfehlerrate R(p) hinsichtlich fehlerhaft zu fehlerfrei übertragener Daten unter einen, beispielsweise durch den internationalen Standard IEC 61508 vorgegebenen Wert zu bringen, so dass den entsprechenden, hohen sicherheitstechnischen Anforderungen im Hinblick auf die Kommunikation insbesondere zwischen fehlersicheren Peripherie-Teilnehmern und fehlersicheren CPU-Teilnehmern entsprochen wird.

Üblicherweise geschieht dies durch die Erweiterung der Daten um einen Datensicherungswert, welcher basierend auf den Nutzdaten generiert wird und dem jeweiligen Protokoll entsprechend den Nutzdaten eines zu übertragenden Datenpakets angehängt wird.

Aufgrund bestehender Vorschriften muss häufig ferner, ausgehend von einer Fehlerrate p, nachgewiesen werden, dass die Restfehlerrate R(p) den vorgegebenen Wert unterschreitet. Hierbei muss, sofern kein besserer Wert nachgewiesen wird, für p der Wert $10^{-2}$ angenommen werden. Datenübertragungen, beispielsweise nach dem Standard RS 485/422, erreichen jedoch üblicherweise eine bessere Fehlerrate, beispielsweise von $10^{-5}$. Soll dieser Wert für den Nachweis des Unterschreitens einer vorgegebenen Restfehlerrate R(p) verwendet werden, so muss er im laufenden Betrieb, also Online überwacht werden. Wird der Wert überschritten, so muss eine sicherheitsgerichtete Funktion ausgeführt werden.

In der Europäischen Patentanmeldung EP-A1-1 147 643 werden ein Verfahren und ein Netzwerkteilnehmer beschrieben, mit welchen die Ermittlung der Fehlerrate p über die Auswertung des Datensicherungswertes erfolgt.

Gemäß Offenbarung der Europäischen Patentanmeldung ist zur Überwachung einer Übertragung zwischen Netzwerkteilnehmern von jeweils einen Datensicherungswert aufweisenden Datenpaketen, deren Empfang ggfs. vom Empfänger mit einer Quittung bestätigt wird, folgender Weg aufgezeigt. Das Erkennen, ob ein empfangenes Datenpaket während der Übertragung verfälscht wurde, basiert auf einer Überprüfung des Datensicherungswerts. Der ein übertragenes Datenpaket empfangende Teilnehmer generiert anhand der Nutzdaten den Datensicherungswert erneut. Dieser wird anschließend mit dem empfangenen Datensicherungswert verglichen. Auf den Vergleichsergebnissen basierend, wird entweder innerhalb eines vorgegebenen oder vorgebbaren Zeitintervalls oder während einer vorgegebenen oder vorgebbaren Anzahl übertragener Datenpakete die sich ergebende Anzahl von verfälschten und unverfälschten Datenpaketen oder Quittungen ermittelt. Eine sicherheitsgerichtete Reaktion wird in Folge ausgelöst, falls das Verhältnis von verfälschten zu unverfälschten Datenpaketen oder die Anzahl verfälschter Datenpakete einen vorgebbaren Schwellwert erreicht oder überschreitet.

Ein wesentlicher Nachteil hierbei ist jedoch insbesondere, dass eine derartige Überprüfung erst nach vollständigem Empfang übertragener Datenpakete erfolgen kann, da jeweils sowohl der empfangene Nutzinhalt zur erneuten Generierung des Datensicherungswertes als auch der empfangene Datensicherungswert zur Verifizierung eines fehlerfrei oder fehlerbehaftet übertragenen Datenpaketes vollständig beim Empfänger vorliegen muss.

Eine Aufgabe der Erfindung ist es somit, einen sicheren und wesentlich schnelleren Weg aufzuzeigen, mit welchem folglich eine wesentlich zeitnahere sicherheitsgerichtete Überwachung der Übertragung in Bezug auf fehlerbehaftet und fehlerfrei übertragene Datenpakete anhand eines vorgegebenen und/oder vorgebbaren Fehler-, insbesondere Restfehler- und/oder Bitfehlerratengrenzwertes durchführbar ist.

Die erfindungsgemäße Lösung der Aufgabe ist auf höchst überraschende Weise bereits durch ein Verfahren mit den Merkmalen des Anspruchs 1, eine Vorrichtung mit den Merkmalen des Anspruchs 9 und/oder ein Netzwerk mit den Merkmalen des Anspruchs 16 gegeben.

Vorteilhafte und/oder bevorzugte Ausführungsformen bzw. Weiterbildungen sind Gegenstand der jeweiligen abhängigen Ansprüche.

Erfindungsgemäß ist somit zur Überwachung einer Übertragung von Datenpaketen zwischen wenigstens zwei Netzwerkteilnehmern, wobei unter Ansprechen auf erkannte fehlerhaft übertragene Datenpakete und erkannte fehlerfrei übertragene Datenpakete eine sicherheitsgerichtete Überwachung eines fehlerbasierten Grenzwertes auf dem Übertragungsmedium durchgeführt wird, vorgeschlagen, zur Ermittlung von fehlerhaft und fehlerfrei übertragenen Datenpaketen innerhalb der Nutzdaten einen von jeweils wenigstens einem Netzwerkteilnehmer erwarteten Datensatz einzubetten, der zur Ermittlung von fehlerhaft und fehlerfrei übertragenen Datenpaketen verwendet wird.

Ein wesentlicher Vorteil hierbei ist, dass durch Überprüfung eines übertragenen Datensatzes gegenüber dem entsprechenden erwarteten Datensatz die sicherheitsrelevante Verifizierung der Übertragung in Bezug auf das Einhalten eines fehlerbasierten Grenzwertes bereits durchgeführt wird, bevor die jeweiligen Datenpakete vollständig bei den bestimmten Empfangsteilnehmern eingegangen sind. Somit ist in Folge sichergestellt, dass ggf. einerseits eine notwendige sicherheitsgerichtete Reaktion wesentlich zeitnaher ausgelöst wird und andererseits, dass eine notwendige erneute Übertragung fehlerhaft übertragener Datenpakete frühzeitiger erfolgen kann. Darüber hinaus eröffnet die erfindungsgemäße Lösung die Möglichkeit einer wesentlich effizienteren Kapazitätsauslastung und/oder -nutzung des Netzwerkes.

In bevorzugter Weiterbildung ist ferner vorgesehen, dass ein die Auswertung von erkannten fehlerhaft übertragenen Datenpaketen und erkannten fehlerfrei übertragenen Datenpaketen durchführender Teilnehmer diese pro definierbaren Zeitintervallen durchführt und/oder die jeweilige Anzahl von fehlerhaft übertragenen Datenpaketen und fehlerfrei übertragenen Datenpaketen zueinander in ein Verhältnis setzt.

In besonders bevorzugter Weiterbildung ist ferner vorgesehen, dass die zur Ermittlung verwendeten NutzDatensätze Adressen und/oder Kontrollblöcke, beispielsweise zur Kontrolle des Übertragungspfades über Schrittketten durch Austausch derartiger Kontrollblöcke, umfassen.

Die Erfindung ist somit insbesondere bei Netzwerken anwendbar, bei denen die Wahrscheinlichkeit des Ausfalls eines Teilnehmers und hieraus resultierende fehlerhafte Datenkontrollsätze und/oder Adressen sehr viel geringer ist, als die fehlerhafte Übertragung in Folge anderer Störungen auf dem Übertragungsmedium, beispielsweise durch EMV-Störungen.

Je nach anwendungsspezifischer Ausbildung ist es vorteilhaft, die Überwachung gegenüber einem, auf der Basis eines Fehler-, Restfehler- und/oder Bitfehlerraten basierenden Grenz- oder Schwellwertes durchzuführen.

Ferner hat es sich insbesondere für die Praxis als vorteilhaft gezeigt, dass eine erfindungsgemäße effiziente sicherheitsrelevante Überwachung anwendungsspezifisch bereits eine hohe Sicherheit gewährleistet, wenn die Überwachung unter Zugrundelegen eines diskreten gedächtnislosen Übertragungskanals mittels einer auf einer Bernoulli'schen Verteilung basierenden funktionalen Beziehung zwischen der Wahrscheinlichkeit, einen fehlerhaften Datensatz einer bestimmten Länge zu empfangen und einer vorgebbaren maximalen Fehlerrate durchgeführt wird.

In äußerst zweckmäßiger Ausführungsform schlägt die Erfindung ferner vor, das Produkt aus einer maximalen Fehlerrate und der Anzahl der Bits innerhalb des erwarteten Datensatzes als Grenz- oder Schwellwert zu definieren.

Darüber hinaus ermöglicht die Erfindung in vorteilhafter Weise, dass die Überwachung im Wesentlichen durch jeden hierzu bestimmten Teilnehmer durchführbar ist, so dass je nach spezifischer Netzwerkausbildung Slave-Teilnehmer und/oder Master-Teilnehmer hierzu ausbildbar sind. In bevorzugter Weiterbildung ist daher zur Durchführung einer zentralen Überwachung vorgeschlagen, Informationen über erkannte fehlerhaft und/oder fehlerfrei übertragener Datensätze von dem jeweils wenigstens einen erkennenden Teilnehmer an den überwachenden Teilnehmer zu übertragen. Die erfindungsgemäße Überwachung auf dem Übertragungsmedium ermöglicht somit eine einfache Netzwerk-spezifische Anpassung, wobei beispielsweise auch eine Gewichtung von erkannten Übertragungsfehlern basierend auf dem jeweiligen Ort der Fehlererkennung und der nachfolgenden Netzwerkstruktur vorgesehen ist.

Ein erfindungsgemäß angepasstes Netzwerk ist in bevorzugter Weise als Bussystem, insbesondere als Ringbussystem ausgebildet, wobei auch linien-, stern-, baumförmige und/oder andersartige Bus- und/oder Netzstrukturen von der Erfindung erfasst sind.

In weiterer bevorzugter Ausbildung umfasst die Erfindung erfindungsgemäß angepasste Netzwerke zum Betreiben von Automatisierungsanlagen, zur Gebäudeleittechnik, in der Prozessindustrie, zum Personentransport und/oder in der Fertigungsindustrie.

Die Erfindung wird nachfolgend anhand einer bevorzugten jedoch beispielhaften Ausführungsform unter Bezugnahme auf die Zeichnung näher beschrieben.

In der Zeichnung zeigt

Fig. 1     eine für die Anwendung der Erfindung beispielhafte Netzwerkstruktur, und

Fig. 2     einen bevorzugten Aufbau eines gemäß der Erfindung zu übertragenden Datenpakets.

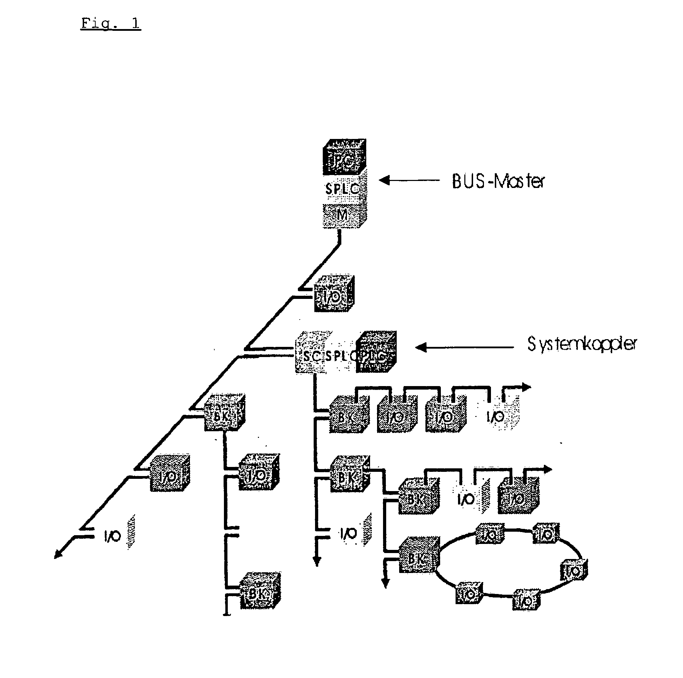

Bezugnehmend auf Fig. 1 umfasst eine bevorzugte jedoch beispielhafte Netzwerkstruktur für die Anwendung der Erfindung einen Bus-Master mit entsprechenden Kommunikationstreibern und programmierbarem Sicherheitsteuerungsmodul, verschiedene, mit I/O gekennzeichnete Ein-/Ausgangs-Netzwerkteilnehmer, ggfs. mit integrierten dezentralen Sicherheitsfunktionen sowie einen Systemkoppler und Gateways BK. Die Ein-/Ausgangs-Teilnehmer sind, ungeachtet von Systemkopplern und Gateways BK, über das gesamte Netzwerk verteilt. Die Gesamtstruktur des Netzwerkes ist gemischt und weist einzelne, miteinander gekoppelte ring-, linien-, stern-, und baumförmige Busstrukturen auf.

Findet die Verarbeitung der erfindungsgemäßen Sicherheitsüberwachung durch Treiberbausteine einer dem Master zugeordneten Sicherheitssteuerung statt, dann müssen für die Gesamtreaktionszeit auch die Übertragungszeiten über das Netzwerk berücksichtigt werden. Durch eine Integration dieser Sicherheitsfunktion basierend auf entsprechend angepassten Treibermodulen in sichere Ein-/Ausgangsteilnehmer wird folglich auch die Verarbeitungszeit für die sicherheitsgerichtete Reaktion verkürzt, insbesondere sobald das Überschreiten eines fehlerbasierten Grenz- oder Schwellwertes bei der Übertragung von Daten zwischen Teilnehmern erfasst wird.

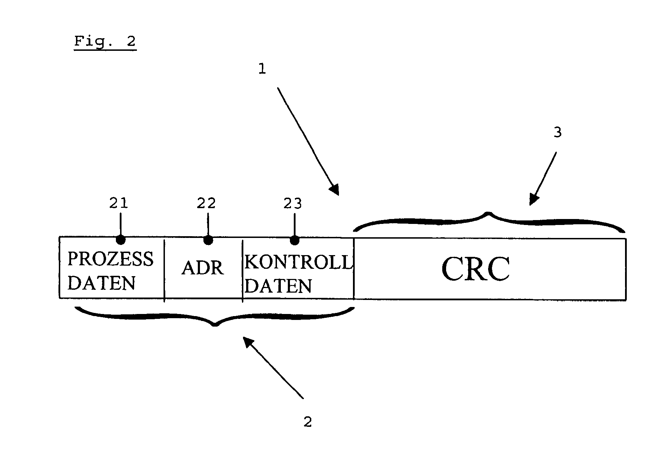

Unter zusätzlicher Inbezugnahme auf Fig. 2 ist beispielhaft ein zu übertragendes Datenpaket 1 gemäß der Erfindung dargestellt. Das Datenpaket 1 umfasst einen protokollspezifischen Nutzdatenblock 2 und einen daran angehängten Datenblock 3 mit einem auf dem Nutzdatenblock 2 basierten Datensicherungswert auf.

Herkömmlicher Weise wird ein derartiger Datensicherungsblock 3 durch sendende Teilnehmer mit angepassten treiberartigen Mittel generiert, um anhand der Daten im Nutzdatenblock 2 einen Fehler-Prüf-Algorithmus, beispielsweise in Form eines an sich bekannten "Cycle Redundancy Check" durchzuführen. Hierbei werden anhand des Fehler-Prüf-Algorithmus vor der Übertragung aus den Nutzdaten 2 des zu übertragenden Datenpaketes 1 Sicherungsdaten 3 in Form eines CRC-Wertes, welcher den Nutzdaten 2 nachfolgend im Übertragungsformat angehängt wird, erzeugt.

Gemäß der Erfindung umfasst der Nutzdatenblock 2 zusätzlich zu reinen Eingangs-/Ausgangsdaten bzw. Prozessdaten 21 ferner Adressen 22 und/oder Kontrollsätze 23 und/oder zusätzliche sichere oder nicht sichere Daten. Diese Daten dienen nicht, wie der Datensicherungsblock 3, der Datensicherung bei der Übertragung des jeweiligen Datenpaketes sondern gestatten es dem Kommunikationsteilnehmer, die einwandfreie Funktion des Gegenteilnehmers zu überprüfen. So ist beispielsweise vorgesehen, eine Kontrolle des Übertragungspfades über Schrittketten durch jeweiligen Austausch von Kontrollsätzen 23 durchzuführen.

Ein wesentliches Kennzeichen dieser zusätzlichen Daten 22, 23 ist insgesamt, dass der je nach spezifischer Netzwerkausbildung empfangende und/oder beobachtende Teilnehmer eine Erwartungshaltung in Bezug auf den Dateninhalt hat. Ihm sind diese Daten bei fehlerfreier Funktion des Gegenteilnehmers bzw. des sendenden Teilnehmers also vor dem Empfang bekannt.

Unter Zugrundelegen, dass die Wahrscheinlichkeit des Ausfalls eines Teilnehmers und hieraus resultierende fehlerhafte Datenkontrollsätze 23 und/oder Adressen 22 sehr viel geringer ist als die fehlerhafte Übertragung der Daten auf dem Übertragungsmedium durch andere Ursachen, beispielsweise durch EMV-Störungen, wird erfindungsgemäß, wie nachfolgend näher beschrieben, eine Fehlerrate p auf dem Übertragungsmedium aus dem Verhältnis von fehlerhaft zu fehlerfrei übertragenen Datenkontrollsätzen 23 und/oder Adressen 22 ermittelt.

Es hat sich gezeigt, dass im Wesentlichen für alle herkömmlichen Netzwerksysteme die Wahrscheinlichkeit des Ausfalls eines Teilnehmers geringer ist als die fehlerhafte Übertragung der Daten in Folge anderer Ursachen.

Für den nachfolgenden beispielhaften Ansatz zur Ermittlung eines Grenz- oder Schwellwertes wird der Einfachheit halber ferner von stochastisch verteilten unabhängigen Fehlern auf einem binären symmetrischen diskreten, gedächtnislosen Übertragungskanal (also von einem sogenannten Hard-Decision-Channel, DMC) ausgegangen. Basierend auf der weiteren Annahme einer Bernoulli'schen Verteilung ergibt sich in bevorzugter Weise ein Zusammenhang zwischen der Wahrscheinlichkeit E(p), einen fehlerhaften übertragenen Datenkontrollsatz 23 einer bestimmten Länge "l" zu beobachten und/oder zu empfangen und einer vorgebbaren und/oder vorgegebenen Fehlerrate p auf dem Übertragungsmedium wie folgt:

$$E(p) = \sum_{e=1}^{l} \binom{l}{e} p^e (1-p)^{l-e} \,,$$

wobei "e" die Bit-Laufvariable bis zur bestimmten Länge "l" darstellt.

Für kleine Fehlerraten p gilt somit

$$E(p) = p \cdot l$$

näherungsweise.

Die Wahrscheinlichkeit E(p) wird somit zweckmäßigerweise aus dem Verhältnis von fehlerhaft zu fehlerfrei übertragenen Nutzdatensätzen bestimmt, so dass sich die Fehlerrate p zu

$$p = \frac{E(p)}{l}$$

ergibt. Die dem Nutzdatenblock 2 angehängten Datensicherungswerte 3 müssen hingegen bei der Auswertung nicht berücksichtigt werden, welches folglich zu einer früheren Reaktion führt, da für die Überwachung bereits der Empfang eines Teils des Datenpakets ausreicht.

Wird beispielsweise eine maximale Fehlerrate $p_{max} = 10^{-5}$ vorgegeben, die nicht überschritten werden darf und ist beispielsweise die Länge "l" des zu überwachenden Datensatzes gleich 8 Bit, ergibt sich eine Wahrscheinlichkeit E (p) zu $8 * 10^{-5}$.

Im Mittel darf somit nur einer von 12500 zu überwachenden Datensätzen fehlerhaft sein. Ist dies nicht der Fall, wird in Folge die Auslösung einer entsprechend voreingestellten oder sich hieraus ergebenden sicherheitsrelevanten Reaktion bewirkt.

Ergänzend oder alternativ ist vorgesehen, dass die sicherheitsgerichtete Reaktion in Abhängigkeit von pro definierbaren Zeitintervallen erkannten fehlerhaft übertragenen Datenpaketen und erkannten fehlerfrei übertragenen Datenpaketen durchgeführt wird.

Die erfindungsgemäße Sicherheitsüberwachung kann hierbei je nach spezifischer Ausbildung der zu überwachenden Datensätze und/oder der applikationsbasierten Netzwerkstrukturen, wie vorstehend erwähnt, im Master oder in Slave-Teilnehmern durchgeführt werden. Die empfangenden und/oder beobachtenden Teilnehmer senden folglich, sofern diese nicht die eigentliche sicherheitsgerichtete Überwachung durchführen, entsprechende Information über erkannte fehlerhaft übertragene Nutzdatensätze an den oder die überwachenden Teilnehmer. Eine einfache Netzwerk-spezifische Anpassung, beispielsweise durch Gewichtung von erkannten Übertragungsfehlern basierend auf dem jeweiligen Ort der Fehlererkennung und der nachfolgenden Netzwerkstruktur und/oder durch Berücksichtigung von Übertragungszeiten über das Netzwerk, ist somit sichergestellt.

Darüber hinaus ist die Erfindung vorzugsweise für Netzwerke, insbesondere Bussysteme im Bereich der Fertigungsindustrie, des Personentransportes, der Feuerungstechnik, der Prozessindustrie oder im Bereich der Gebäudeleittechnik einsetzbar.

**Patentansprüche**

1. Verfahren zur Überwachung einer Übertragung von Datenpaketen zwischen wenigstens zwei Netzwerkteilnehmern,
   wobei unter Ansprechen auf erkannte fehlerhaft übertragene Datenpakete (1) und erkannte fehlerfrei übertragene Datenpakete (1) eine sicherheitsgerichtete Überwachung eines fehlerbasierten Grenzwertes auf dem Übertragungsmedium durchgeführt wird, **dadurch gekennzeichnet,**
   **dass** innerhalb der Nutzdaten (2) eines jeweiligen Datenpaketes (1) ein jeweils wenigstens von einem Netzwerkteilnehmer erwarteter Datensatz (22, 23) übertragen wird, der zur Ermittlung von fehlerhaft und fehlerfrei übertragenen Datenpaketen (1) verwendet wird.

2. Verfahren nach Anspruch 1, **dadurch gekennzeichnet, dass** eine Auswertung von erkannten fehlerhaften Datenpaketen (1) und erkannten fehlerfreien Datenpaketen (1) pro definierbarem Zeitintervall durchgeführt wird.

3. Verfahren nach Anspruch 1 oder 2, **dadurch gekennzeichnet, dass** das Verhältnis aus erkannten fehlerhaften Datenpaketen (1) zu erkannten fehlerfreien Datenpaketen (1) gebildet wird.

4. Verfahren nach Anspruch 1, 2 oder 3, **dadurch gekennzeichnet, dass** als erwartete Datensätze (22, 23) Adressensätze (22) und/oder Kontrollsätze (23) verwendet werden.

5. Verfahren nach einem der vorstehenden Ansprüche, **dadurch gekennzeichnet, dass** die Überwachung unter Zugrundelegen eines diskreten gedächtnislosen Übertragungskanals mittels einer auf einer Bernoulli'schen Verteilung basierenden funktionalen Beziehung zwischen der Wahrscheinlichkeit, einen fehlerhaften Datensatz einer bestimmten Länge zu empfangen und einer vorgebbaren maximalen Fehlerrate durchgeführt wird.

6. Verfahren nach einem der vorstehenden Ansprüche, **dadurch gekennzeichnet, dass** als fehlerbasierter Grenzwert das Produkt aus einer vorgegebenen oder vorgebbaren Fehlerrate und der Anzahl der Bits innerhalb des erwarteten Datensatzes definiert wird.

7. Verfahren nach einem der vorstehenden Ansprüche, **dadurch gekennzeichnet, dass** die Überwachung von wenigstens einem Slave-Teilnehmer und/oder wenigstens einem Master-Teilnehmer durchgeführt wird.

8. Verfahren nach vorstehendem Anspruch, **dadurch gekennzeichnet, dass** zur Durchführung der Überwachung Information über erkannte fehlerhafte und/oder fehlerfreie Datenpakete von dem jeweils wenigstens einen erwartenden Teilnehmer an wenigstens einen überwachenden Teilnehmer übertragen wird.

9. Vorrichtung zur Überwachung einer Übertragung von Datenpaketen zwischen wenigstens zwei Netzwerkteilnehmern, umfassend
   Mittel zur sicherheitsgerichteten Überwachung eines fehlerbasierten Grenzwertes unter Ansprechen auf erkannte fehlerhaft übertragene Datenpakete (1) und erkannte fehlerfrei übertragene Datenpakete (1), **gekennzeichnet durch** Mittel zur Ermittlung von fehlerhaft und fehlerfrei übertragenen Datenpaketen (1) basierend auf einem innerhalb der Nutzdaten (2) eines jeweiligen Datenpaketes (1) eingebetteten, erwarteten Datensatz (22, 23).

10. Vorrichtung nach Anspruch 9, **dadurch gekennzeichnet, dass** die Mittel zur sicherheitsgerichteten Überwachung ausgebildet sind, eine Auswertung von erkannten fehlerhaften Datenpaketen (1) und erkannten fehlerfreien Datenpaketen (1) pro definierbarem Zeitintervall durchzuführen und/oder das Verhältnis aus erkannten fehlerhaften Datenpaketen (1) zu erkannten fehlerfreien Datenpaketen (1) zu bilden.

11. Vorrichtung nach Anspruch 9 oder 10, **dadurch gekennzeichnet, dass** die Mittel zur Ermittlung ausgebildet sind, auf als erwartete Datensätze (22, 23) verwendete Adressensätze (22) und/oder Kontrollsätze (23) anzusprechen.

12. Vorrichtung nach einem der Ansprüche 9 bis 11, **dadurch gekennzeichnet, dass** die Überwachungsmittel für einen diskreten gedächtnislosen Übertragungskanal und zum Bilden einer funktionalen Beziehung zwischen der Wahrscheinlichkeit, einen fehlerhaften Datensatz einer bestimmten Länge zu empfangen und einer maximalen Fehlerrate, basierend auf einer Bernoulli'schen Verteilung ausgebildet sind.

13. Vorrichtung nach einem der Ansprüche 9 bis 12, **dadurch gekennzeichnet, dass** als fehlerbasierter Grenzwert das Produkt aus einer Fehlerrate und der Länge des erwarteten Datensatzes definiert ist.

14. Vorrichtung nach einem der Ansprüche 9 bis 13, **dadurch gekennzeichnet, dass** die Mittel zur Ermittlung Slave-Teilnehmern und die Mittel zur Überwachung wenigstens einem Slave-Teilnehmer und/ oder einem Master-Teilnehmer zugeordnet sind.

15. Vorrichtung nach einem der Ansprüche 9 bis 14, **dadurch gekennzeichnet, dass** die Mittel zur Ermittlung Netzwerkteilnehmern zugeordnet sind, die ausgebildet sind, unter Ansprechen auf erkannte fehlerhafte und/oder fehlerfreie Datenpakete entsprechende Information an wenigstens einen überwachenden Teilnehmer zu übertragen.

16. Netzwerk mit einer Vorrichtung nach einem der Ansprüche 9 bis 15.

17. Netzwerk nach Anspruch 16, umfassend wenigstens ein ring-, linien-, stern- und/oder baumförmig ausgebildetes Bussystem.

18. Verwendung eines Netzwerkes nach Anspruch 16 oder 17 in der Gebäudeleittechnik, Prozessindustrie, Fertigungsindustrie, zum Personentransport und/ oder zum Betreiben einer Automatisierungsanlage.

**Claims**

1. Method for monitoring transmission of data packets between at least two network subscribers, wherein, in response to recognised erroneously transmitted data packets (1) and recognised error-free transmitted data packets (1), security-orientated monitoring of an error-based threshold value is carried out on the transmission medium, **characterised in that** within the payload data (2) of a respective data packet (1) a respective data set (22, 23) expected by at least one network subscriber is transmitted which is used to determine erroneously and error-free transmitted data packets (1).

2. Method according to claim 1, **characterised in that** an evaluation of recognised erroneous data packets (1) and recognised error-free data packets (1) is carried out for each definable time interval.

3. Method according to claim 1 or 2, **characterised in that** the ratio of recognised erroneous data packets (1) to recognised error-free data packets (1) is formed.

4. Method according to claim 1, 2 or 3, **characterised in that** address sets (22) and / or control sets (23) are used as expected data sets (22, 23).

5. Method according to one of the preceding claims, **characterised in that** the monitoring is carried out using as a basis a discrete memoryless transmission channel by means of a functional relationship based upon a Bernoulli distribution between the probability of receiving an erroneous data set of a certain length and a predefinable maximum error rate.

6. Method according to one of the preceding claims, **characterised in that** the product of a predefined or predefinable error rate and the number of bits within the expected data set is defined as an error-based threshold value.

7. Method according to one of the preceding claims, **characterised in that** the monitoring of at least one slave subscriber and / or at least one master subscriber is carried out.

8. Method according to the preceding claim, **characterised in that** for the implementation of the monitoring, information concerning recognised erroneous and / or error-free data packets is transmitted from the respective at least one expecting subscriber to at least one monitoring subscriber.

9. Device for monitoring a transmission of data packets between at least two network subscribers, comprising means for security-orientated monitoring of an error-based threshold value in response to recognised erroneously transmitted data packets (1) and recognised error-free transmitted data packets (1), **characterised by** means for determining erroneously and error-free transmitted data packets (1) based upon an expected data set (22, 23) embedded within the payload data (2) of a respective data packet (1).

10. Device according to claim 9, **characterised in that** the means for security-orientated monitoring are designed to carry out an evaluation of recognised erroneous data packets (1) and recognised error-free data packets (1) for each definable time interval and / or to form the ratio of recognised erroneous data packets (1) to recognised error-free data packets (1).

11. Device according to claim 9 or 10, **characterised in that** the determining means are designed to respond to address sets (22) and / or control sets (23) used as expected data sets (22, 23).

12. Device according to one of the claims 9 to 11, **characterised in that** the monitoring means are designed for a discrete memoryless transmission channel and for forming a functional relationship between the probability of receiving an erroneous data set of a certain length and a maximum error rate, on the basis of a Bernoulli distribution.

13. Device according to one of the claims 9 to 12, **characterised in that** the product of an error rate and the length of the expected data set is defined as an error-based threshold value.

14. Device according to one of the claims 9 to 13, **characterised in that** the determining means are assigned to slave subscribers and the monitoring means are assigned to at least one slave subscriber and/ or one master subscriber.

15. Device according to one of the claims 9 to 14, **characterised in that** the determining means are assigned to network subscribers which are designed to transmit, in response to recognised erroneous and / or error-free data packets, corresponding information to at least one monitoring subscriber.

16. Network with a device according to one of the claims 9 to 15.

17. Network according to claim 16, comprising at least one ring-form, linear, star-form and / or tree-form bus system.

18. Use of a network according to claim 16 or 17 in structural control technology, process industry, manufacturing industry, for transport of persons and / or for operating an automation system.

**Revendications**

1. Procédé de surveillance d'une transmission de paquets de données entre au moins deux utilisateurs de réseau,
dans lequel on effectue, en réaction à des paquets de données (1) reconnus comme transmis avec erreur et à des paquets de données (1) reconnus comme transmis sans erreur, une surveillance sécurisée d'une valeur limite, basée sur les erreurs, sur le moyen de transmission, **caractérisé par le fait que**, à l'intérieur des données utiles (2) d'un paquet de données (1) respectif, on transmet un bloc de données (22, 23) qui est attendu à chaque fois au moins par un utilisateur de réseau et qui est utilisé pour la détermination de paquets de données (1) transmis avec erreur et sans erreur.

2. Procédé selon la revendication 1, **caractérisé par le fait que** l'on effectue une évaluation de paquets de données (1) reconnus avec erreur et de paquets de données (1) reconnus sans erreur pour chaque intervalle de temps pouvant être défini.

3. Procédé selon la revendication 1 ou 2, **caractérisé par le fait que** l'on forme le rapport entre paquets de données (1) reconnus comme transmis avec erreur et paquets de données (1) reconnus comme transmis sans erreur.

4. Procédé selon la revendication 1, 2 ou 3, **caractérisé par le fait que** l'on utilise comme blocs de données attendus (22, 23) des blocs d'adresse (22) et/ou des blocs de contrôle (23).

5. Procédé selon l'une des revendications précédentes, **caractérisé par le fait que** l'on effectue la surveillance en se basant sur un canal de transmission discret sans mémoire au moyen d'une relation fonctionnelle, basée sur une distribution de Bernoulli, entre la probabilité de recevoir un bloc de données avec erreur d'une certaine longueur et un taux d'erreurs maximal pouvant être prescrit.

6. Procédé selon l'une des revendications précédentes, **caractérisé par le fait que** l'on définit comme valeur limite basée sur les erreurs le produit d'un taux d'erreurs prescrit ou pouvant être prescrit par le nombre des bits à l'intérieur du bloc de données attendu.

7. Procédé selon l'une des revendications précédentes, **caractérisé par le fait que** la surveillance est effectuée par au moins un utilisateur esclave et/ou au moins un utilisateur maître.

8. Procédé selon la revendication précédente, **caractérisé par le fait que**, pour la mise en oeuvre de la surveillance, une information sur des paquets de données reconnus avec erreur et/ou sans erreur est transmise par le ou les utilisateurs respectifs qui attend(ent) à au moins un utilisateur qui surveille.

9. Dispositif de surveillance d'une transmission de paquets de données entre au moins deux utilisateurs de réseau, comprenant des moyens pour la surveillance sécurisée d'une valeur limite, basée sur les erreurs et prescrite et/ou pouvant être prescrite, en réaction à des paquets de données (1) reconnus comme transmis avec erreur et à des paquets de données (1) reconnus comme transmis sans erreur, **caractérisé par** des moyens pour la détermination de paquets de données (1) transmis avec erreur et sans erreur en se basant sur un bloc de données (22, 23) attendu inséré à l'intérieur des données utiles (2) d'un paquet de données (1) respectif.

10. Procédé selon la revendication 9, **caractérisé par le fait que** les moyens pour la surveillance sécurisée sont conçus pour effectuer une évaluation de paquets de données (1) reconnus avec erreur et de paquets de données (1) reconnus sans erreur pour chaque intervalle de temps pouvant être défini et/ou pour former le rapport entre paquets de données (1) reconnus avec erreur et paquets de données (1) reconnus sans erreur.

11. Dispositif selon la revendication 9 ou 10, **caractérisé par le fait que** les moyens pour la détermination sont conçus pour réagir à des blocs d'adresse (22) et/ou à des blocs de contrôle (23) utilisés comme blocs de données attendus (22, 23).

12. Dispositif selon l'une des revendications 9 à 11, **caractérisé par le fait que** les moyens de surveillance sont conçus pour un canal de transmission discret sans mémoire et pour la formation d'une relation fonctionnelle entre la probabilité de recevoir un bloc de données avec erreur d'une certaine longueur et un taux d'erreurs maximal en se basant sur une distribution de Bernoulli.

13. Dispositif selon l'une des revendications 9 à 12, **caractérisé par le fait que** le produit d'un taux d'erreurs par la longueur du bloc de données attendu est défini comme valeur limite basée sur les erreurs.

14. Dispositif selon l'une des revendications 9 à 13, **caractérisé par le fait que** les moyens pour la détermination sont associés à des utilisateurs esclaves et que les moyens pour la surveillance sont associés à au moins un utilisateur esclave et/ou un utilisateur maître.

15. Dispositif selon l'une des revendications 9 à 14, **caractérisé par le fait que** les moyens pour la détermination sont associés à des utilisateurs de réseau qui sont conçus pour, en réaction à des paquets de données reconnus avec erreur et/ou sans erreur, transmettre une information correspondante à au moins un utilisateur qui surveille.

16. Réseau avec un dispositif selon l'une des revendications 9 à 15.

17. Réseau selon la revendication 16, comprenant au moins un système de bus conçu en forme d'anneau, de ligne, d'étoile et/ou d'arborescence.

18. Utilisation d'un réseau selon la revendication 16 ou 17 en technique de gestion des bâtiments, dans l'industrie des processus, dans l'industrie de fabrication, pour le transport de personnes et/ou pour l'exploitation d'une installation automatisée.

**Fig. 1**

EP 1 443 696 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2337672 A
- EP 1147643 A1